# EUROPEAN PATENT APPLICATION

(11) **EP 1 248 283 A1**
(43) Date of publication of application: **09.10.2002**
(21) Application number: 01307136.0
(22) Date of filing: 22.08.2001
(51) Int. Cl.: H01J 61/56, H01J 61/32

(54) **Novel structures for electronically-controlled compact fluorescent lamps**

(30) Priority: 04.04.2001 US 826313
(71) Applicant: E. Energy Technology Ltd., Kowloon, Hong Kong (CN)
(72) Inventor: Hui, Shu Yuen, Ron, Shatin, New Territories (HK); Chung, Shu-Hung, Henry, Scenecliff (HK)
(74) Representative: Watkin, Timothy Lawrence Harvey

(57) **Abstract**

Novel structures for electronically-controlled compact fluorescent lamps are described in which the space defined by a folded discharge tube is used to locate a housing for at least a part of the electronic-control circuitry. This reduces the size of the lamp, and allows temperature sensitive components to be located in a relatively cool region. The housing can be provided with a reflective coating to improve the illumination uniformity, and if made of metal can act as a heat sink.

## Description

### FIELD OF THE INVENTION

This invention relates to novel structures for electronically-controlled compact fluorescent lamps, and in particular to such structures that provide improved space efficiency, improved illumination and improved operating life.

### BACKGROUND OF THE INVENTION

Electronically-controlled compact fluorescent lamps are becoming more popular as an alternative to a traditional incandescent light-bulbs. They have the advantages of greater efficiency and longer-life. However, there remain a number of drawbacks with existing compact fluorescent lamps that prevent them from obtaining even wider acceptance and use. In particular, existing compact fluorescent lamps are still somewhat larger than incandescent light bulbs, the illumination given out by a compact fluorescent lamp is not uniform, and the lifetime of the compact fluorescent lamp is often limited by the deleterious effects of high-temperatures on the electronic control circuit.

### PRIOR ART

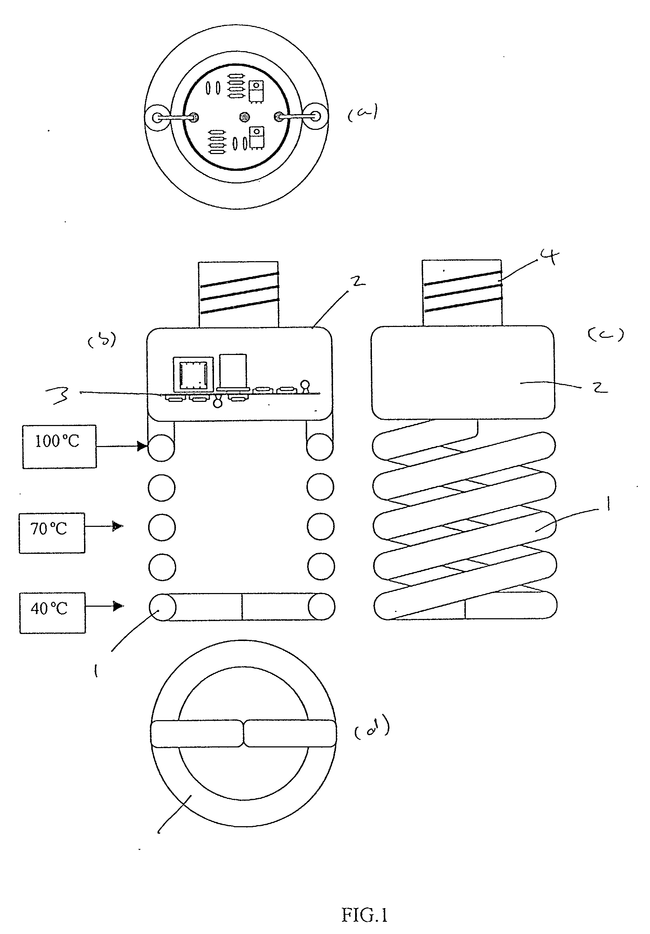

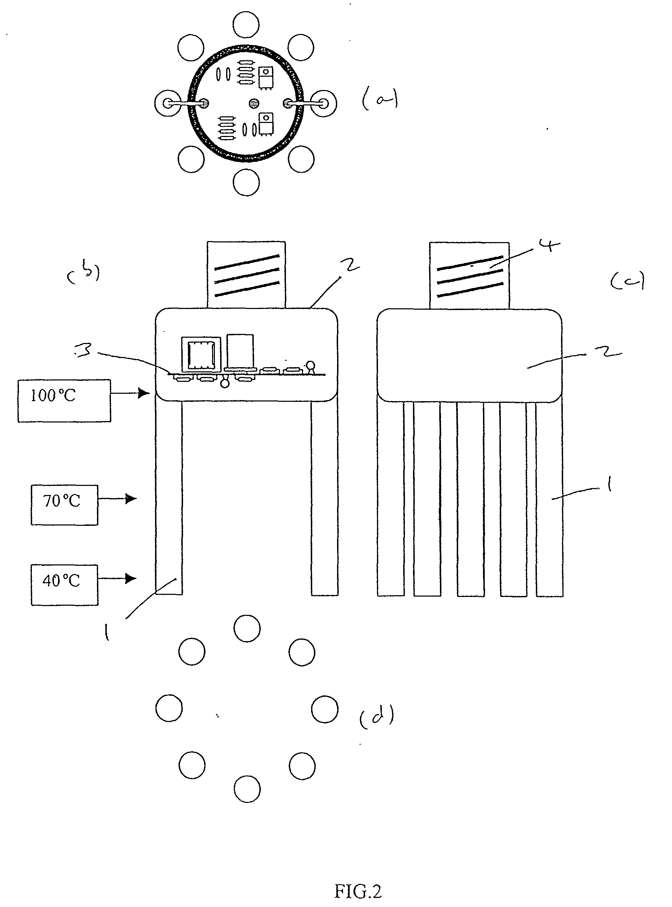

These drawbacks can be illustrated with reference to Figs.1 and 2 that illustrate conventional compact fluorescent lamp designs. A compact fluorescent lamp comprises a fluorescent discharge tube 1, and a housing 2 in which is located an electronic control circuit board 3 including control circuitry such as an electronic ballast. A screw connection 4 enables the lamp to be connected to a socket. The fluorescent discharge tube 1 is a single continuous tube that is folded into one of a number of shapes. In Fig.1 the discharge tube 1 is formed as a spiral around a central axis, while in Fig.2 the tube 1 is formed as a series of U-shapes symmetrically disposed around a central axis. At either end of the discharge tube 1 there is provided a filament element (not shown) that is connected to the electronic control circuitry. The electronic control circuitry, such as an electronic ballast, is formed on a printed circuit board located within the housing 2 which may be formed of a plastics material. The housing 2 is positioned between the discharge tube 1 and the screw connection 4.

Such conventional designs have a number of drawbacks. Firstly the lamps are relatively large, and to a large extent this is because the housing has to be quite large to accommodate the electronic control circuitry. This extra size means that often a compact fluorescent lamp cannot fit into a lamp fitting designed for an incandescent bulb and the compact fluorescent lamp cannot be used to replace directly an incandescent bulb.

A further disadvantage is that the filaments generate a very high temperature.

With an ambient temperature of room temperature the filaments of a compact fluorescent lamp operated at only 23W can reach temperatures of the order of 700°C-1000°C. With the filaments at these temperatures, the temperature of the glass discharge tube adjacent the filaments can be around 100°C to 120°C. As is illustrated in Figs.1 and 2 there is a temperature gradient along the discharge tube with the temperature decreasing away from the ends of the discharge tube containing the filaments down to around 40°C, but with conventional designs for compact fluorescent lamps the electronic control circuitry in the housing is located closely adjacent the filaments and thus in the hottest part of the lamp. Furthermore such lamps are often ceiling fitted such that the discharge tube is beneath the housing. Since heat rises, and may be trapped in the housing, the temperature in the vicinity of the control circuitry is even higher and the problem is aggravated. Temperature in the housing can also be increased by heat given out by some of the components of the control circuitry, such as switching and conduction losses in the switching power circuit, and core losses in magnetic components.

These high temperatures reduce the lifetime of the lamp. Even if the components of the electrical control circuitry are rated for operation at such temperatures, they would nonetheless have a still longer lifetime if they were operated at a lower temperature.

A further disadvantage of such conventional designs is that the illumination from the lamp is not uniform, but generally follows the shape and configuration of the folded discharge tube. It is known that the discharge tube may be surrounded with an opaque housing, but while this does help mitigate the problem it does not completely solve it and the shape of the discharge tube can still be seen through the opaque housing.

### SUMMARY OF THE INVENTION

It is an object of the present invention to provide novel structures for compact fluorescent lamps that overcome or at least mitigate the above problems, and which structures in particular provide compact fluorescent lamps of reduced size, longer operating life and improved illumination distribution.

According to the present invention there is provided a compact electronically-controlled fluorescent lamp, comprising: a continuous folded discharge tube arranged around a longitudinal axis of the lamp, and a housing located on said axis within a space defined by said folded discharge tube, and wherein at least a part of an electronic control circuit for controlling operation of said lamp is located within said housing.

By means of this arrangement a large part of the electronic control circuitry can be located within the housing in the space defined by the discharge tube that would otherwise be wasted. Furthermore temperature sensitive components may be located away from the high temperature filaments.

Another advantage of the present invention is that the housing may be formed with a reflective outer surface. This may improve the uniformity of the illumination given out by the lamp.

The discharge tube may be folded in a spiral about the axis, or may be folded so as to present a series of tube sections parallel to the axis and spaced equidistantly on a circle about the axis. In either of these cases, to make maximum use of the space defined by the tube it is preferable for the housing to have a cylindrical form with a circular cross-section.

In other embodiments the discharge tube is folded so as to present a series of sections arranged in a rectangular configuration about the axis. In such a case the housing may have a cuboid form with a rectangular cross-section.

The cross-section of the housing could also be polygonal.

The electronic components forming the control circuit or part thereof provided within the housing may be located on a printed circuit board, which circuit board may be located within the housing such that the axis is perpendicular to the board. Alternatively the printed circuit board may be located within the housing such that the axis is parallel to or lies within said board.

Viewed from another aspect the present invention provides a compact electronically-controlled fluorescent lamp, comprising: a continuous folded discharge tube arranged around a longitudinal axis of the lamp to define a space bounded by said discharge tube, wherein at least a part of an electronic control circuit for controlling operation of said lamp is located in said space defined by said discharge tube.

Viewed from a still further aspect the present invention provides a compact electronically-controlled fluorescent lamp, comprising: a continuous folded discharge tube arranged around a longitudinal axis of the lamp to define a space bounded by said discharge tube, wherein a reflective surface is provided within said space to reflect light outwardly of said lamp.

Viewed from a still further aspect of the present invention there is provided a compact electronically-controlled fluorescent lamp, comprising: a continuous folded discharge tube arranged around a longitudinal axis of the lamp to define a space bounded by said discharge tube, wherein a heat sink means is provided within said space.

### BRIEF DESCRIPTION OF THE DRAWINGS

Some embodiments of the invention will now be described by way of example and with reference to the accompanying drawings, in which:
Fig.1(a)-(d) shows plan and side views of a first compact fluorescent lamp in accordance with the prior art,
Fig.2(a)-(d) shows plan and side views of a second compact fluorescent lamp in accordance with the prior art,
Fig.3(a)-(d) shows plan and side views of a compact fluorescent lamp according to a first embodiment of the invention,
Fig.4(a)-(d) shows plan and side views of a compact fluorescent lamp according to a second embodiment of the invention,
Fig.5(a)-(d) shows plan and side views of a compact fluorescent lamp according to a third embodiment of the invention,
Fig.6(a)-(d) shows plan and side views of a compact fluorescent lamp according to a fourth embodiment of the invention,
Fig.7(a)-(d) shows plan and side views of a compact fluorescent lamp according to a fifth embodiment of the invention,
Fig.8(a)-(d) shows plan and side views of a compact fluorescent lamp according to a sixth embodiment of the invention,
Fig.9(a)-(d) shows plan and side views of a compact fluorescent lamp according to a seventh embodiment of the invention, and
Fig.10(a)-(d) shows plan and side views of a compact fluorescent lamp according to an eighth embodiment of the invention.

### DETAILED DESCRIPTION OF PREFERRED EMBODIMENTS

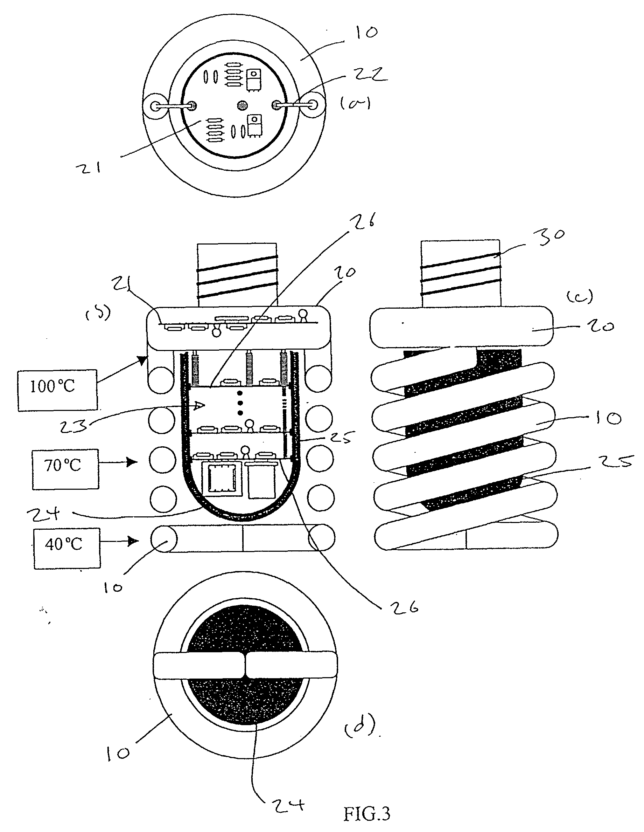

Several embodiments of the invention will now be described by way of example with reference to Figs.3 to 8. Fig.3 will be described firstly and in more detail than the other figures all of which are similar to Fig.3 and only the differences between those Figures and Fig.3 will be highlighted. Parts that are unchanged between Fig.3 and the subsequent Figures will not be discussed in detail.

Figs.3(a)-(d) show four views of a first embodiment of the invention. In these views: Fig.3(b) is a side view in section; Fig.3(c) is a side view not in section; Fig.3(a) is a plan view from above on a line through a printed circuit board carrying some of the electronic control circuitry; and Fig.3(d) is a view from below. For the sake of convenience in the following description, it will be assumed that the lamps are to be fitted to a ceiling such that the discharge tube is below the remainder of the lamp, and references to "above" and "below", "upper" and "lower" should be construed accordingly. It will be understood that the invention is not of course to be regarded as being so limited. References in this specification to the term "the axis of the lamp", and the like, mean the longitudinal axis of the lamp about which a lamp would be rotated when being screwed into screw fitting. The format of the subsequent Figures is the same.

Figs.3(a)-(d) show a compact fluorescent lamp formed of a single continuous folded fluorescent discharge tube 10. In this embodiment (as in the prior art example of Fig.2) the tube is folded into a spiral about a longitudinal vertical axis of the lamp. The lamp is provided with a screw connector 30 above the discharge tube 10 for connection to a lamp fitting. Between the discharge tube 10 and the screw connector 30 is provided a relatively thin first housing 20. Within the first housing 20 is located a circuit board 21 provided with a number of electronic components and from which connecting wires 22 connect the electronic control circuitry to the filaments located at the two ends of the discharge tube 10.

Beneath the first housing 20, within the space defined within the spiral of the discharge tube, is formed a second housing 23. In this embodiment the second housing 23 is circular in cross-section and is formed with a part-spherical dome 24 at its lowermost end, ie the end furthest away from the first housing 20. Within this second housing is located the major part of the electronic control circuitry, such as an electronic ballast, on a number of horizontal spaced apart circuit boards 26. The components of the electronic control circuitry may be arranged within the second housing in any desired manner, but it is particularly preferred if the most temperature sensitive components are located at the far end of the second housing 23 within the part-spherical dome 24, that is to say as far away from the high-temperatures generated by the filaments as is possible. It is known that even if an electronic component is rated for high temperature use, its expected operating life will still be longer if the component is operated at a lower temperature.

It will be appreciated that by providing a second housing 23 within the space defined by the discharge tube, otherwise wasted space may be employed. In the prior art this space is dead space, but in this embodiment of the present invention it is used to locate a major part of the electronic control circuitry. This has a number of significant advantages. Firstly, by locating a major part of the electronic control circuitry within the space defined by the folded discharge tube 10, the size of the first housing 20 between the discharge tube 10 and the screw connection 30 can be substantially reduced, thus reducing the overall size of the lamp. Only minimum components such as those required to make the connection to the filaments need be located within the first housing 20. Secondly it becomes possible to locate temperature sensitive electronic components in a relatively cooler part of the lamp further away from the heat generated by the filaments, thus increasing the expected operating life of the lamp.

Referring back to Fig.3, the second housing 23 is formed of a plastics material, for example the same type of material as the first housing 20 and the non-metallic parts of the screw connection. However, the outer surface of the second housing 23 may be provided with a reflective coating 25. This has the advantage of improving the diffusion of illumination from the discharge tube 10 so that more uniform illumination is given out by the fluorescent lamp and the shape of the discharge tube is less apparent. A further advantage is that the reflective coating 25 assists in the dissipation of heat from the second housing 23. A further advantage of the present invention is that the second housing 23 - regardless of whether or not it is provided with a reflective coating - can act as a heat sink for drawing heat away from the filaments and dissipating the heat by convection if it is made of a suitable material such as metal. Indeed the present invention also contemplates the possibility that a heat sink means alone (ie without necessarily acting as a housing for electronic components and without necessarily being reflective) may be located in the space defined by the folded discharge. Such a heat sink means would increase the operating life of the lamp in comparison with the prior art.

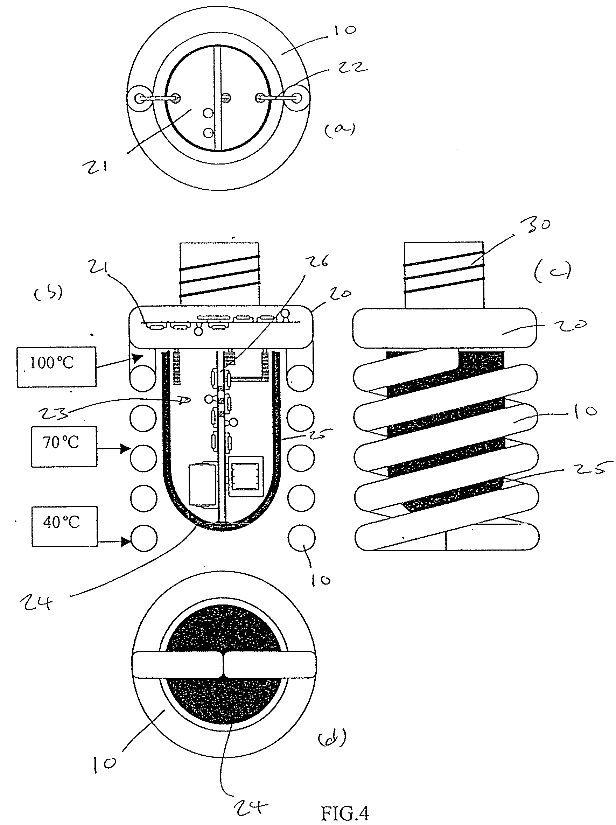

Figs.4(a)-(d) show a second embodiment of the invention that is similar to the first embodiment. The difference is that whereas in the first embodiment the electronic components received within the second housing 23 are located on a number of horizontal spaced apart circuit boards 26, in the second embodiment a single larger vertically oriented circuit board 26 is provided. In all other respects the embodiments of Figs.3 and 4 are substantially identical.

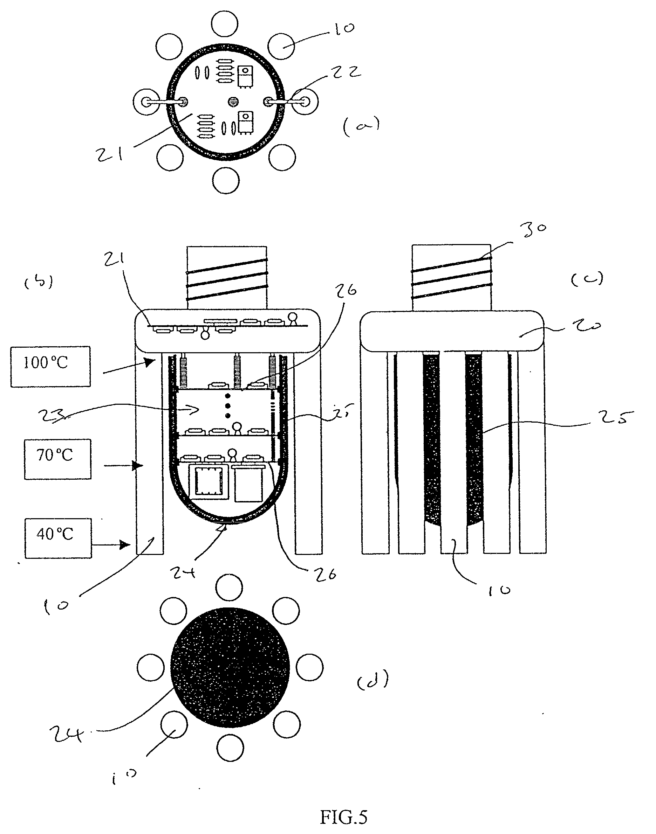

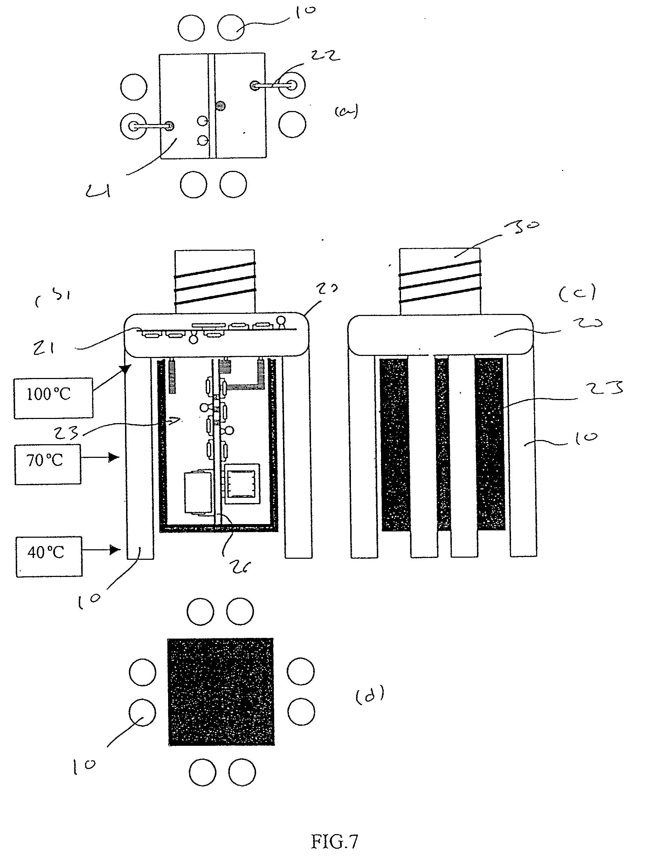

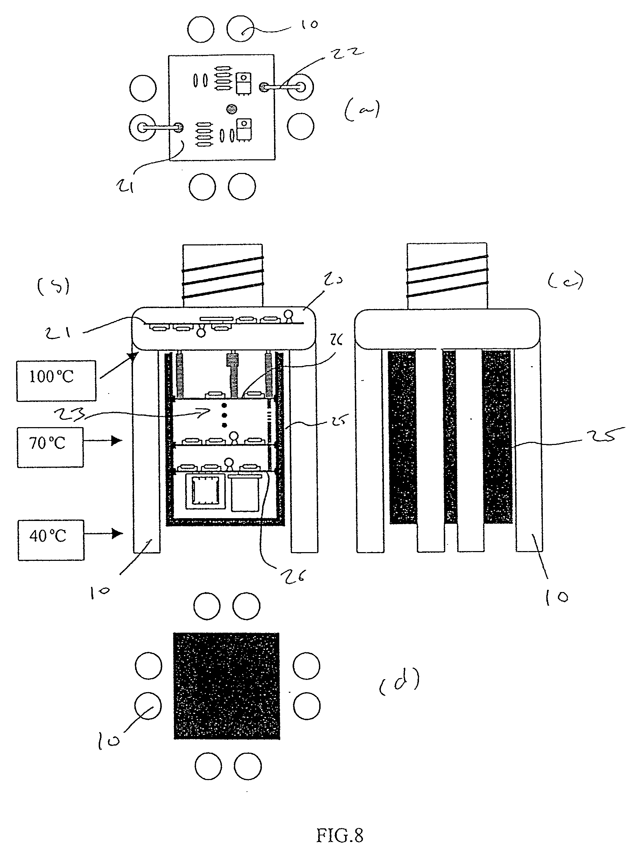

Figs.5(a)-(d) shows a third embodiment of the invention in which the discharge tube 20 is folded into a series of U-shapes so as to define eight vertical sections of the tube arranged equidistantly around a central longitudinal axis of the lamp. A cylindrical second housing 23 with a domed end 24 is provided in the inner space defined by these eight sections of the discharge tube 20 and receives the major part of the electronic control circuitry as in the embodiment of Fig.3. Alternatively, the cylindrical second housing having a flat end may be used instead, as illustrated in the embodiments shown in Figures 7 and 8.

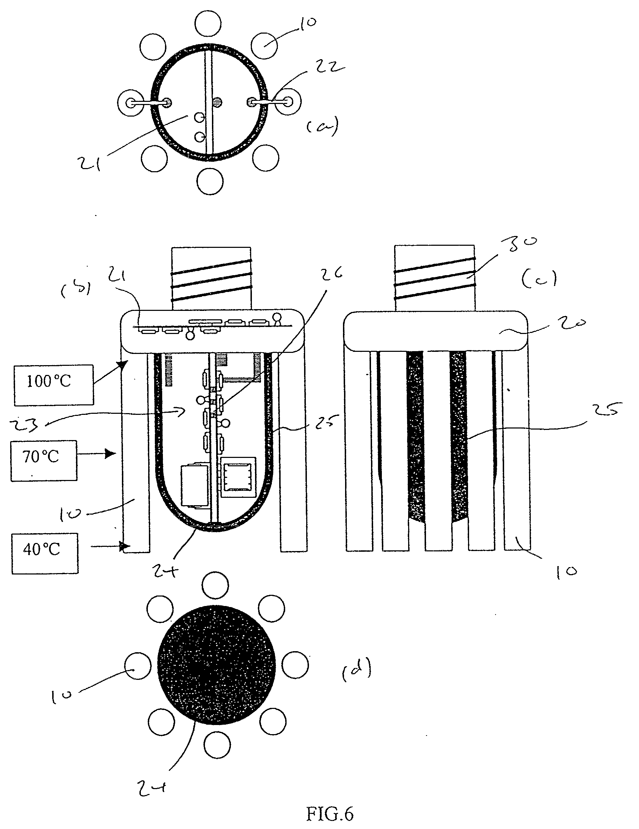

In the embodiment of Fig.5 the electronic components in the second housing are mounted on horizontal circuit boards as shown in Fig.3, while the embodiment of Fig.6 is the same as Fig.5 except that a single vertical circuit board is provided as in Fig.4.

In the embodiments of Figs.7 and 8, the discharge tube 20 is folded to define a series of four U-shapes arranged in the form of a square. In this embodiment it is more appropriate for the second housing 23 to be cuboid with a square cross-section in order to make the maximum use of the space defined within the folded discharge tube. As in the previous embodiments the second housing 23 is provided with a reflective coating 25. The electronic control circuitry may be provided on vertical (Fig.7) or horizontal (Fig.8) circuit boards.

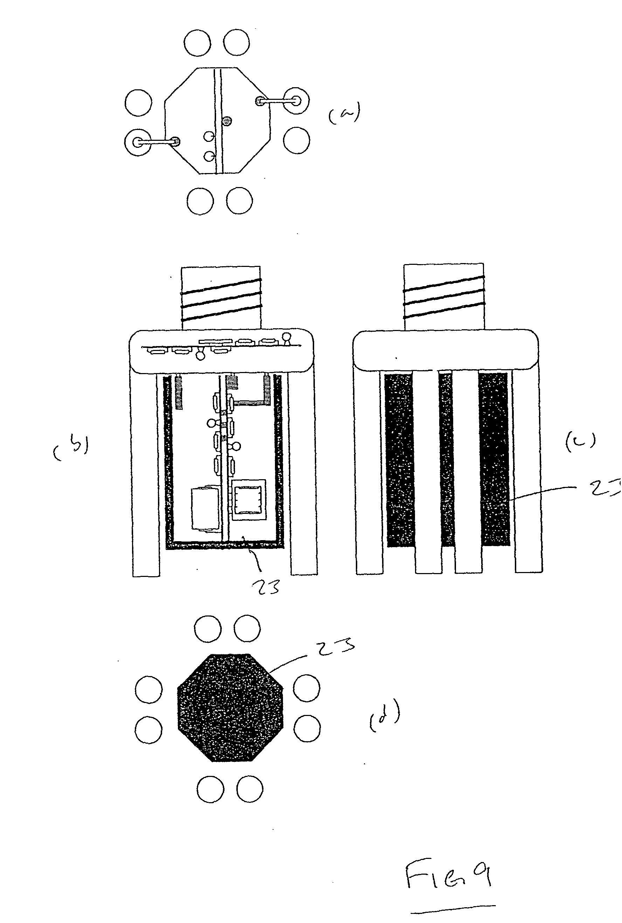

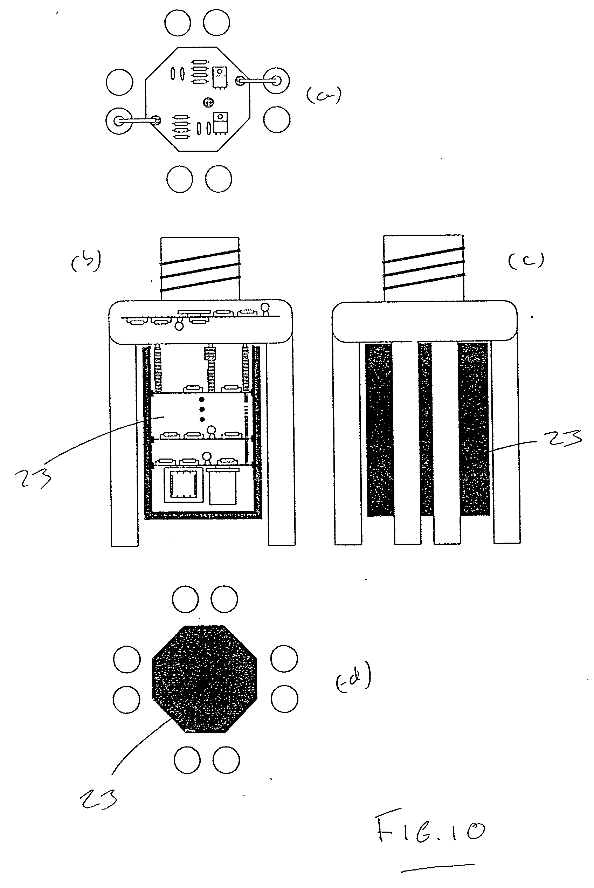

It will be understood that there are a number of other possible ways of implementing the invention. For example a suitably sized cylindrical second housing could be used even when the discharge tube is arranged in a rectangular manner, and similarly a suitably sized cuboid second housing could be used in the space defined by a spiral discharge tube, or circumferentially arranged discharge tube sections. The particular examples shown in the embodiments are preferred, however, as they provide maximum space efficiency. Housings of a triangular or polygonal cross-section may also be useful. Figs.9(a)-(d) and 10(a)-(d) show examples with octagonal cross-sections.

The reflective coating on the second housing may be a smooth coating, or it may comprise a plurality of individual small reflective elements. The reflective coating may be applied either only to the sides of the second housing, or to the complete second housing including the end of the housing remote from the first housing and screw connection. Furthermore an opaque cover may be provided surrounding the lamp to still further improve the uniformity of the illumination.

## Claims

1. A compact electronically-controlled fluorescent lamp, comprising: a continuous folded discharge tube arranged around a longitudinal axis of the lamp, and a housing located on said axis within a space defined by said folded discharge tube, and wherein at least a part of an electronic control circuit for controlling operation of said lamp is located within said housing.

2. A lamp as claimed in claim 1 wherein said housing is formed with a reflective outer surface.

3. A lamp as claimed in claim 1 wherein said discharge tube is folded in a spiral about said axis.

4. A lamp as claimed in claim 1 wherein said discharge tube is folded so as to present a series of tube sections parallel to said axis and spaced equidistantly on a circle about said axis.

5. A lamp as claimed in claim 3 or 4 wherein said housing has a cylindrical form with a circular cross-section.

6. A lamp as claimed in claim 5 wherein said housing has a domed end portion.

7. A lamp as claimed in claim 5 wherein said housing has a flat end portion.

8. A lamp as claimed in claim 1 wherein said discharge tube is folded so as to present a series of sections arranged in a rectangular configuration about said axis.

9. A lamp as claimed in claim 8 wherein said housing has a cuboid form with a rectangular cross-section.

10. A lamp as claimed in claim 1 wherein said housing has a circular, rectangular or polygonal cross-section.

11. A lamp as claimed in claim 1 wherein the electronic components forming the control circuit or part thereof provided within said housing are located on a printed circuit board.

12. A lamp as claimed in claim 11 wherein said printed circuit board is located within said housing such that said axis is perpendicular to said board.

13. A lamp as claimed in claim 11 wherein said printed circuit board is located within said housing such that said axis is parallel to or lies within said board.

14. A compact electronically-controlled fluorescent lamp, comprising: a continuous folded discharge tube arranged around a longitudinal axis of the lamp to define a space bounded by said discharge tube, wherein at least a part of an electronic control circuit for controlling operation of said lamp is located in said space defined by said discharge tube.

15. A compact electronically-controlled fluorescent lamp, comprising: a continuous folded discharge tube arranged around a longitudinal axis of the lamp to define a space bounded by said discharge tube, wherein a reflective surface is provided within said space to reflect light outwardly of said lamp.

16. A lamp as claimed in claim 15 wherein said reflective surface is rectangular, circular or polygonal in cross-section.

17. A compact electronically-controlled fluorescent lamp, comprising: a continuous folded discharge tube arranged around a longitudinal axis of the lamp to define a space bounded by said discharge tube, wherein a heat sink means is provided within said space.
